# FASCICULE DE BREVET EUROPEEN

(11) **EP 1 076 530 B1**
(45) Date de publication et mention de la délivrance du brevet: **03.12.2003**
(21) Numéro de dépôt: 99916993.1
(22) Date de dépôt: 05.05.1999
(51) Int. Cl.: A61C 7/14, A61C 7/12, A61C 7/30

(54) **APPAREIL POUR LE TRAITEMENT ORTHODONTIQUE**
VORRICHTUNG ZUR ORTHODONTISCHEN BEHANDLUNG
ORTHODONTIC TREATMENT APPARATUS

(30) Priorité: 05.05.1998 FR 9805909
(43) Date de publication de la demande: 21.02.2001
(73) Titulaire: Aknin, Jean-Jacques, 69100 Villeurbanne (FR)
(72) Inventeur: Aknin, Jean-Jacques, 69100 Villeurbanne (FR)
(74) Mandataire: Maureau, Philippe
(86) Numéro de dépôt international: FR9901064
(87) Numéro de publication internationale: WO99056657

(56) Documents cités:
- WO-A-90/14800
- US-A- 4 585 413
- US-A- 5 356 288
- US-A- 5 374 187
- US-A- 5 454 716

## Description

L'invention est relative à un kit dentaire orthodontique.

Pour corriger les malformations dentaires tant sur l'arcade supérieure ou maxillaire que sur celle inférieure ou mandibulaire, il est connu d'utiliser des appareils permettant, dans le cadre d'un traitement orthodontique, de redresser les dents mal positionnées en leur communiquant des efforts tendant à les redresser axialement, c'est à dire dans un plan latéral ou en "torque", c'est-à-dire dans le plan antéro-postérieur.

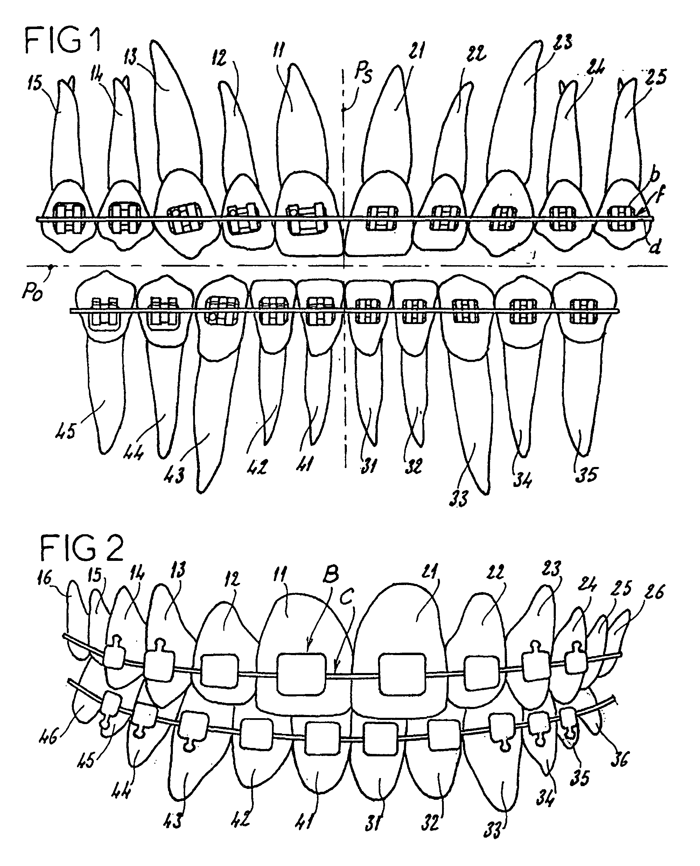

Les appareils actuels comprennent pour chaque arcade dentaire des boîtiers ou supports, aussi dénommés bracket, qui, collés sur la face interne ou externe de chacune des dents comprennent, comme montré figure 1 annexée, d'une part, une embase b dans laquelle est ménagée une gorge horizontale f apte à recevoir un fil d'arcade d en alliage métallique inoxydable auquel l'embase est liée par une ligature, constituée par un anneau en matière synthétique ou un fil métallique.

Chaque boîtier est spécifique à une dent et les fentes horizontales ménagées dans les boîtiers ont une angulation par rapport à leur embase, tant dans le plan vertical frontal que dans le plan vertical antéro-postérieur. Ces angulations varient en fonction des dents sur lesquelles les boîtiers doivent être disposés, et du redressement attendu. De même, les fils d'arcade sont choisis dans une série de plusieurs fils d'arcade se différenciant par la morphologie des arcades dentaires, et pour chaque arcade dentaire, par les efforts de redressement que les branches fournissent. En pratique, les fils d'arcade métalliques ont une section transversale, plus ou moins importante, ronde, carrée ou rectangulaire, et sont modifiés au fur et à mesure de l'évolution du traitement.

Dans une phase de distalisation de certaines dents, les extrémités du fil d'arcade sont liés à des moyens lui communiquant un effort de traction vers l'arrière, c'est-à-dire en direction de l'intérieur de la bouche et générés par des moyens à appui externe péricranien. Au fur et à mesure du traitement, l'orthodontiste adapte l'effort généré par le fil d'arcade et ceux générés par d'éventuelles liaisons intermaxillaires entre l'élément correctif maxillaire et l'élément correctif mandibulaire, de manière à ajuster le repositionnement des dents.

Dans certains appareils, chaque fil d'arcade est inséré horizontalement dans les gorges des boîtiers fixés sur les dents maxillaires et sur les dents mandibulaires. En raison du débouché horizontal de chaque gorge, le fil est insuffisamment maintenu, ce qui favorise la version ou rotation axiale des dents, au cours du traitement, et, en conséquence, ralentit les effets correctifs de ce traitement.

Il en est de même pour les appareils dans lesquels, comme décrit dans US 5 374 187 et US 4 585 413, la gorge horizontale de réception du fil d'arcade est ménagée dans un pont intermédiaire reliant l'embase à une paroi antérieure et débouche verticalement en direction du plan d'occlusion ou de la gencive. En effet, si la liaison avec le fil d'arcade n'est pas ferme, présente du jeu ou est réalisée ponctuellement, elle permet, sous l'effort de redressement communiqué par le fil d'arcade, le basculement de la dent par pivotement autour du centre résistant de celle-ci, se situant à mi hauteur de la racine. Pendant le traitement, la dent pivote dans un sens et dans l'autre en générant sur la racine, des contraintes pouvant conduire à une résorption, c'est-à-dire à une réduction de sa longueur et voire même à la perte de la dent.

Un objet de l'invention est de remédier à ces inconvénients en assurant une liaison positive entre boîtier et fil d'arcade permettant, avec un faible effort de redressement, de redresser la dent suivant un mouvement de translation, ou gression, sans version de la racine.

Avec les appareils actuels, il est nécessaire, dans la phase de distalisation, de recourir à un appareil extra oral à appui péricranien pour générer les efforts de redressement sur les fils d'arcade. Cette solution met à contribution le patient et surtout, par son appui péricranien, provoque parfois des céphalées qui peuvent avoir une incidence négative sur la croissance structurale crânienne et basicrânienne, en particulier chez les jeunes sujets à risque présentant des troubles de l'Articulation Temporo-Maxillaire ou de la statique vertébrale.

Un autre objet de l'invention est de fournir un appareil orthodontique qui supprime tout recours à des tractions extrabuccales à appui péricrânienne.

Un autre inconvénient de ce type d'appareil actuel est son caractère inesthétique, mis en évidence par la figure 1.

En effet, même si chaque boîtier comporte une face antérieure en céramique ou autre, de couleur ivoire, le fil d'arcade métallique forme une ceinture foncée très visible qui attire le regard et dépare l'arcade dentaire.

De même, les ligatures élastomériques liant les boîtiers aux fils d'arcade ajoutent peu à peu à l'aspect inesthétique, puisque, sous l'action de la salive, elles gonflent, se décolorent et jaunissent.

Un autre objet de l'invention est de fournir un appareil affectant peu l'esthétique des arcades dentaires.

Enfin, par ses formes accidentées, chaque boîtier favorise une rétention importante de la plaque dentaire, aussi bien sur ses parties visibles que non visibles. Cette plaque dentaire induit des risques de leucomes, de coloration, de taches de l'émail et voire même des caries.

Un autre objet de l'invention est de réduire la formation de la plaque dentaire, là où elle se forme, et de faciliter le brossage.

L'invention concerne un kit composé pour chaque arcade dentaire, respectivement maxillaire et mandibulaire :
- d'une série de fils d'arcade formant un arc en U, entourant chaque arcade dentaire et se différenciant par les efforts de redressement que leurs branches fournissent, lesdits fils ayant une section transversale rectangulaire avec leurs petits côtés parallèles au plan d'occlusion,
- de boîtiers métalliques se fixant par collage de leur embase sur les incisives, canines et prémolaires, et comportant une gorge horizontale de réception du fil d'arcade, ladite gorge débouchant en direction du plan d'occlusion et étant formée dans un pont intermédiaire reliant l'embase à une paroi antérieure,
- de boîtiers métalliques se fixant par collage de leur embase sur les molaires et comprenant un tunnel de positionnement de l'extrémité de la branche correspondante du fil d'arcade,
- de liens, tels que des anneaux élastiques, de ligature du fil d'arcade dans les gorges des boîtiers,
- et de moyens communiquant, au moins au fil d'arcade maxillaire et dans une phase de traitement, un effort de traction dirigé vers l'arrière.

Selon l'invention, chacun des boîtiers pour les incisives, canines et prémolaires comporte, pour l'accrochage d'un anneau élastique de ligature avec le fil d'arcade et dans le pont intermédaire, d'un côté, entre l'embase et la gorge pour le fil d'arcade, une rainure d'ancrage débouchant en direction du plan d'occlusion, et de l'autre côté, entre l'embase et la paroi antérieure, une gorge horizontale débouchant à l'opposé de la gorge pour le fil d'arcade, tandis que la paroi antérieure a une largeur et une hauteur supérieures à celles de l'embase et à celles du pont intermédiaire, pour masquer ce pont et l'anneau élastique de ligature du fil d'arcade.

Avec cet appareil, les fils d'arcade sont insérés de la partie occlusale vers la partie gingivale, ce qui facilite la tâche du praticien. La disposition des gorges pour l'anneau élastique améliore considérablement le maintien des fils d'arcade qui peuvent ainsi effectuer une correction dentaire plus efficace, sans mouvements parasites.

Les boîtiers sont très faciles à nettoyer, au même titre d'ailleurs que l'embase et le pont intermédiaire, puisque, pour la plupart des boîtiers, ces parties sont débarrassées d'excroissances et saillies diverses.

Au niveau de l'esthétique, les parois antérieures cachent à la vue, non seulement le boîtier, mais aussi une partie du fil d'arcade et les ligatures du fil d'arcade sur le boîtier, en supprimant ainsi l'aspect métallique des appareils actuels.

Lorsque la ligature est mise en place, elle est totalement cachée par la paroi antérieure et ne peut donc pas, dans le temps, détériorer l'esthétique de l'appareil, par exemple en jaunissant sous l'action de la salive.

Dans une forme d'exécution, la ligature formée par l'anneau élastique comporte deux boucles entourant les parties du fil d'arcade débordant longitudinalement du pont intermédiaire et ces boucles résultent de la mise en place de l'anneau élastique autour du pont intermédiaire, dans la rainure et dans la gorge du boîtier, puis, après introduction du fil d'arcade dans la gorge, du pivotement de l'anneau élastique autour du fil d'arcade pour accrochage de sa boucle provenant de la rainure) dans la gorge opposée.

Grâce aux deux boucles, le fil d'arcade est calé fermement dans la gorge en translation verticale, en translation horizontale, et en translation longitudinale, de sorte que la dent ne peut pas pivoter par rapport à lui et ne peut, sous l'effort de redressement, que se déplacer par un mouvement de translation, parallèlement à elle et sans conséquence pour sa racine.

Dans une forme d'exécution, et pour procéder au redressement des pathologies complexes, chaque boîtier pour les canines et prémolaires comporte, dans sa partie entre l'embase et sa partie antérieure, un puits vertical débouchant dans la gorge pour le fil d'arcade et constituant, avec une rainure ménagée dans le fond de ladite gorge, organe d'ancrage pour l'extrémité coudée de l'une des branches d'un ressort en épingle, de redressement axial de la dent, l'autre branche de ce ressort étant muni d'un crochet extrême se crochetant sur le fil d'arcade.

Ainsi, le redressement d'une dent au moyen d'un boîtier de ce type s'effectue par le ressort en épingle qui prend appui sur le fil d'arcade par l'une de ses branches et communique, par son autre branche coopérant avec le pont intermédiaire, l'effort de redressement axial sur le boîtier, donc sur la dent à laquelle ce boîtier est fixé.

Dans une forme de réalisation, l'appareil comporte un fil d'arcade maxillaire de distalisation bilatérale des molaires et canines comprenant, sur chacune de ses branches latérales, d'une part, un ressort hélicoïdal disposé autour de ladite branche et dont l'extrémité antérieure est liée à cette branche par une soudure disposée sur une zone de cette branche venant en retrait de la canine, tandis que l'extrémité postérieure de ce ressort vient en appui sur le boîtier d'une molaire et, d'autre part, un crochet vertical qui, saillant vers le haut d'une partie de la branche venant entre l'incisive latérale et la canine, constitue moyen d'accrochage pour l'une des extrémités d'un anneau élastique de traction intermaxillaire, dont l'autre extrémité est accrochée à un crochet gingival saillant du boîtier fixé sur la première molaire mandibulaire.

Ce dispositif, mis en oeuvre dans une première étape thérapeutique, permet de supprimer tout autre moyen de mise en traction du fil d'arcade et, en particulier, les moyens à appui péricranien. Il s'insère aisément entre les gencives et les joues, et par la bonne liaison entre le fil d'arcade et les gorges des boîtiers sollicités, permet de réduire le temps de redressement.

D'autres caractéristiques et avantages ressortiront de la description qui suit en référence au dessin schématique annexé représentant, à titre d'exemple, les différents éléments d'un appareil selon l'invention à fixation occlusale.
Figure 1 est une vue schématique conventionnelle des dents des arcades maxillaire et mandibulaire équipées d'un appareil de l'état de la technique,
Figure 2 est une vue partielle en perspective par l'avant d'un appareil selon l'invention, lorsqu'il est mis en place sur les deux arcades dentaires,
Figure 3 est une vue partielle de côté montrant les incisives équipées de leurs boîtiers,
Figure 4 est une vue de face de l'incisive maxillaire de figure 3,
Figure 5 est une vue partielle de côté montrant les canines équipées de leurs boîtiers,
Figure 6 est une vue de face en élévation de la canine maxillaire de figure 5,
Figure 7 est une vue en perspective montrant, à échelle agrandie, un boîtier pour canine maxillaire équipé d'un dispositif de redressement axial,
Figure 8 est une vue de côté avec coupe partielle du boîtier de figure 7,
Figure 9 est une vue en perspective, similaire à la figure 7, mais montrant les éléments du dispositif de redressement, lorsqu'ils sont en situation de redressement,
Figure 10 est une vue de côté en élévation d'une prémolaire mandibulaire équipé de son boîtier,
Figure 11 est une vue de face en élévation d'un anneau de ligature équipé de son manche de manipulation,
Figures 12 à 14 sont des vues de côté en élévation montrant différentes phases de la ligature d'un fil d'arcade sur une incisive maxillaire par l'anneau de figure 11,
Figure 15 est une vue en élévation d'une grappe portant plusieurs anneaux de ligature,
Figure 16 est une vue de côté en élévation d'une molaire équipée de son boîtier,
Figure 17 est une vue en perspective d'un fil d'arcade à distalisation bilatérale,
Figure 18 est une vue de côté en élévation d'une denture équipée de l'appareil avec le fil d'arcade de distalisation bilatérale de figure 17.
Figure 19 est une vue en perspective d'une forme d'exécution d'une jauge de positionnement d'un boîtier.

Il est d'usage, selon les normes internationales dans la représentation des deux arcades dentaires, respectivement maxillaire et mandibulaire, de répartir les dents dans quatre quadrants délimités par le plan occlusal PO et par le plan sagittal PS, comme montré à la figure 1, et d'affecter à chaque quadrant une numérotation partant d'une nouvelle dizaine en affectant cette dizaine d'une unité correspondant à la position de la dent par rapport au plan sagittal. Ainsi, dans l'arcade maxillaire, les incisives centrales sont référencées 11 et 21, les incisives latérales 12 et 22, les canines 13, 23, les premières prémolaires 14, 24, les secondes prémolaires 15, 25, les premières molaires 16, 26, les secondes molaires 17 et 27, les dents de l'arcade mandibulaire étant référencée en allant de 31 à 37, 41 et 47, comme montré figures 1 et 2 où la représentation des dents s'arrête sur les prémolaires à la figure 1, sur les premières molaires à la figure 2.

En raison de cette numérotation conventionnelle, dans la description qui suit, les références correspondants aux éléments de l'invention, seront numérotés à partir du nombre 50.

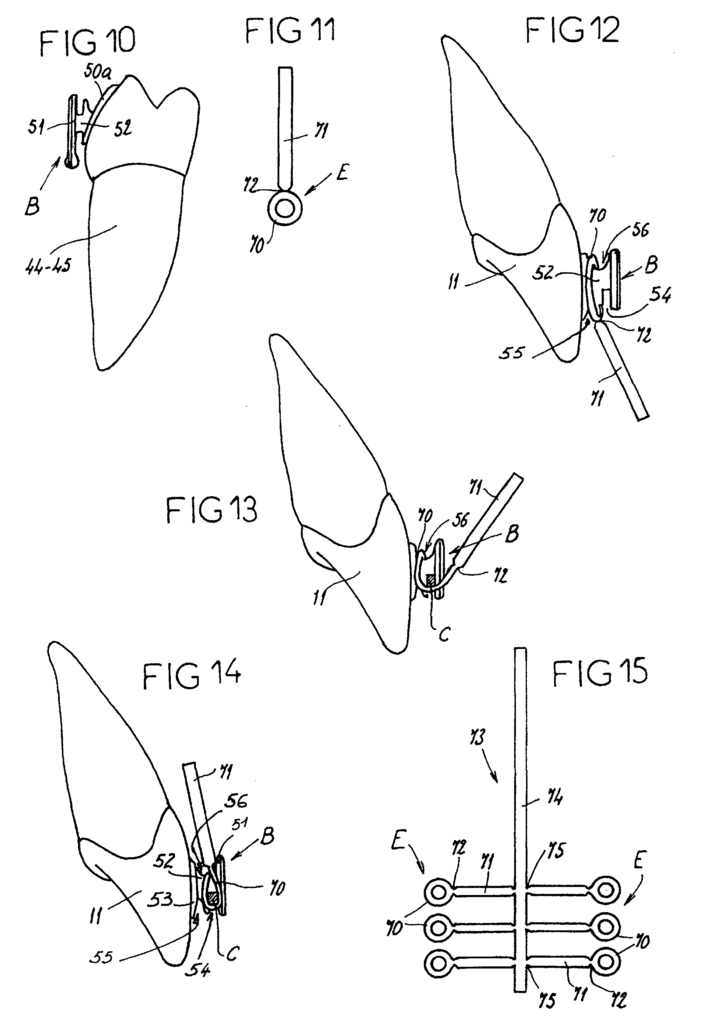

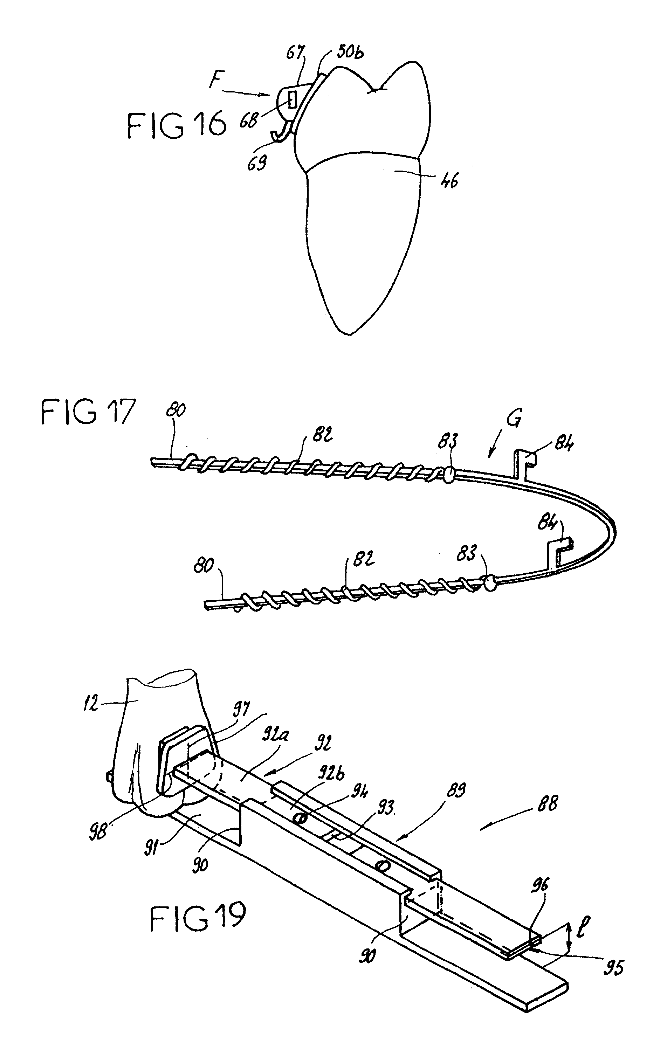

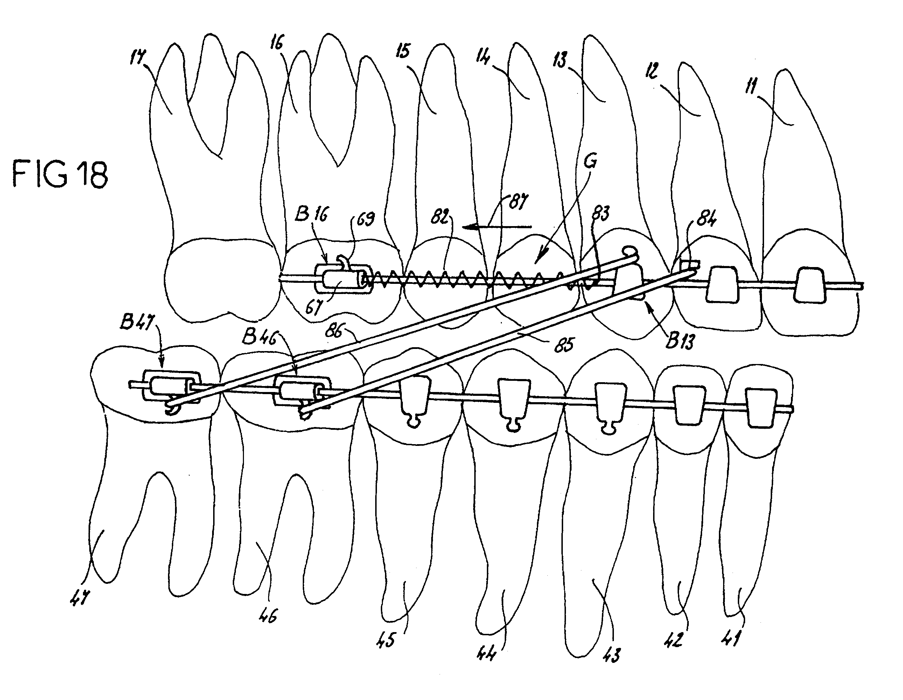

L'appareil selon l'invention est donc composé de boîtiers B, de fils d'arcade C, faisant partie d'une série de plusieurs fils d'arcade, de moyens de ligature E visible figures 11 à 15, de moyen de positionnement F des extrémités des fils d'arcade, visibles figure 16 et de moyen de distalisation G montrés figures 17 et 18.

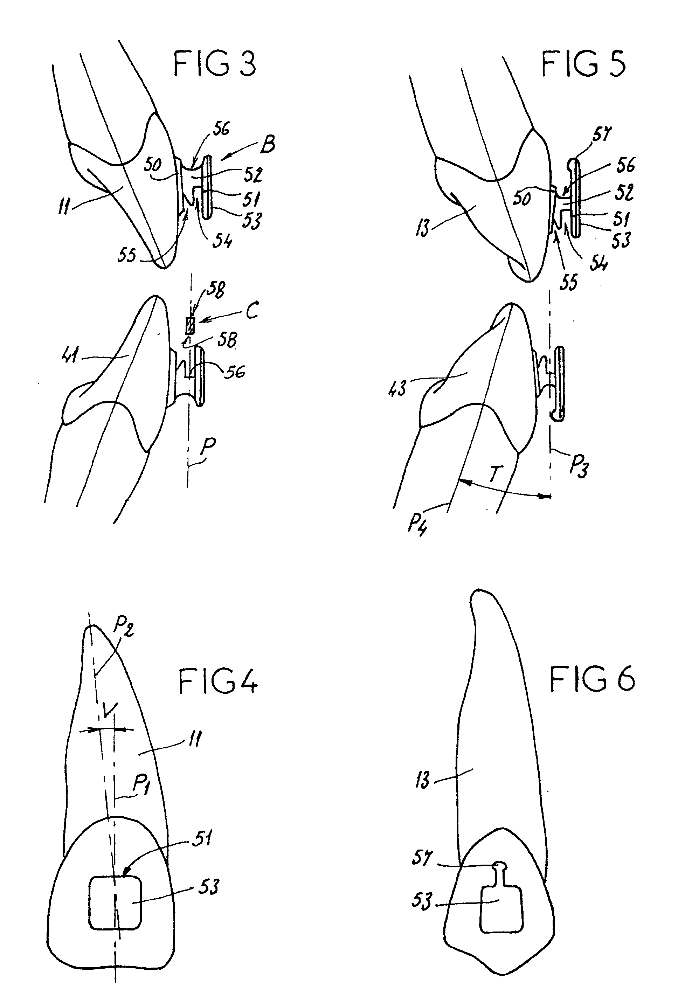

Selon l'invention, et comme montré sur les figures 3 à 6, chaque boîtier B pour les incisives, canines et prémolaires est composé d'une embase 50 permettant sa fixation par collage sur la face antérieure de la dent, d'une paroi antérieure 51 et d'un pont intermédiaire 52. Le boîtier est réalisé en alliage métallique et peut comporter, sur la face antérieure externe de la paroi 51, une plaquette en céramique 53 de couleur ivoire ou adaptée à la coloration des dents. Dans le pont intermédiaire 52, est ménagée une gorge 54, de section rectangulaire et débouchant en direction du plan occlusal, c'est-à-dire vers le bas pour un boîtier pour l'arcade maxillaire et vers le haut pour un boîtier pour l'arcade mandibulaire. Le pont intermédiaire 52 comporte également, d'une part, entre l'embase 50 et la gorge 54, une rainure d'ancrage 55 débouchant du même côté que la gorge 54 et, d'autre part, entre l'embase 50 et la paroi 51, une gorge 56 débouchant à l'opposé de la gorge 54. Les figures 3 à 6 montrent bien que la paroi antérieure 51, vue de face, a une forme carrée ou trapézoïdale, et a une largeur et une hauteur supérieures à celles du pont 52 et de l'embase 50 pour masquer ces deux parties, c'est-à-dire à les cacher à la vue. Comme montré plus spécialement figures 5 et 6, chacun des boîtiers pour les canines et les prémolaires comporte, en plus, un éperon vertical 57 qui fait saillie de la paroi 51 à l'opposé de la gorge 54, c'est-à-dire à l'opposé du plan d'occlusion de la bouche.

La gorge 54, ménagée dans chaque boîtier, a une section transversale rectangulaire lui permettant de recevoir des fils d'arcade de section ronde ou carrée, mais aussi un fil d'arcade de section rectangulaire dont les petits côtés 58 sont parallèles au plan d'occlusion, comme montré à la figure 3. On notera que, lorsque le fil d'arcade est engagé dans la gorge 54, les efforts de réaction au serrage des dents par le fil d'arcade et qui tendent à faire fléchir ce fil d'arcade, sont sans conséquence sur ce fil dans sa partie incluse dans la gorge 54 de chaque boîtier B, puisqu'ils sont contrés par la paroi 51. Il en résulte que les efforts de redressement communiqués aux dents par le fil d'arcade sont bien mieux utilisés que dans les boîtiers comportant une gorge horizontale débouchant sur l'avant et permettent ainsi de réduire le temps du traitement. La correction des rotations dentaires axiales est ainsi très efficace.

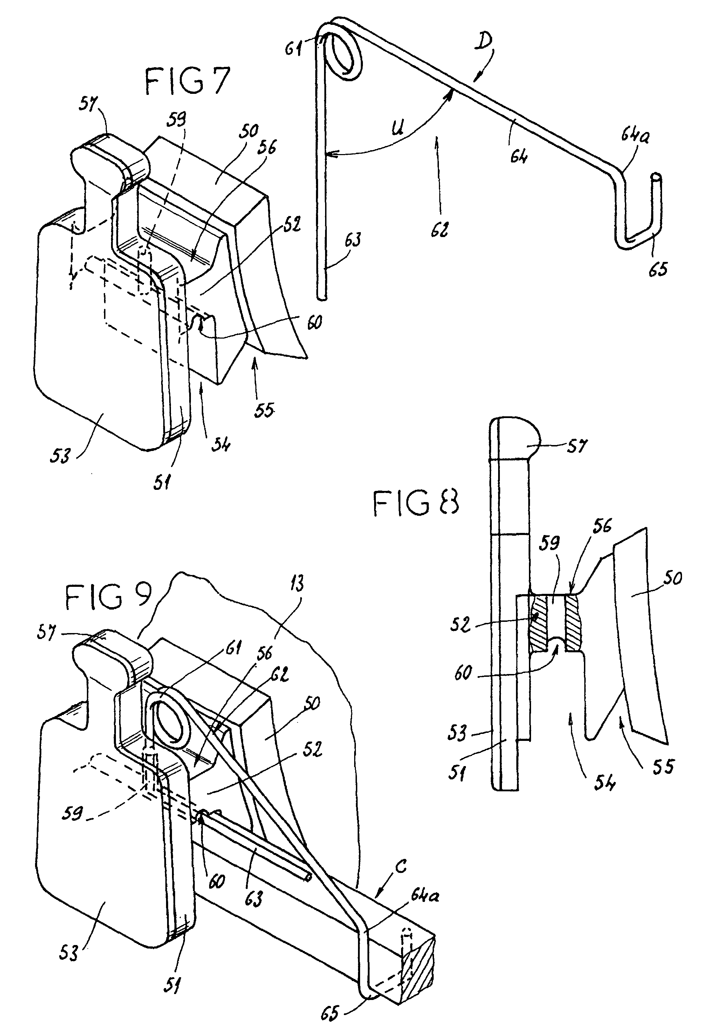

Les figures 7 à 9 montrent un auxiliaire thérapeutique pouvant être utilisé pour le traitement de pathologies complexes, pour lesquelles le redressement procuré par les boîtiers se révélerait insuffisant malgré la bonne liaison boîtier-fil d'arcade.

Dans cetteforme d'exécution, chaque boîtier pour les canines et pour les prémolaires maxillaires est associé à des moyens D de redressement et comporte, dans sa partie intermédiaire 52, un puits vertical traversant 59 débouchant dans la gorge horizontale 54, et plus précisément dans une rainure semi circulaire 60 ménagée dans le fond de cette gorge. Le puits 59 est cylindrique et a un diamètre légèrement supérieur au diamètre extérieur du fil constituant un ressort en épingle 62, comprenant une branche verticale 63 et une branche 64. Les branches 63 et 64 forment au repos un angle u ayant une valeur comprise entre 60 et 90 °. L'extrémité libre de la branche 64 est coudée en 64a et pliée pour former un crochet 65. Lorsqu'un tel boîtier est posé sur une canine maxillaire 13 qui doit être soumise à un redressement axial, dès que la liaison entre le boîtier et la dent est suffisante, la branche 63 du ressort et introduite verticalement dans le puits 59 jusqu'à ce que la spire 61 du ressort 62 vienne en butée sur le fond de la gorge 56. A partir de là, le redressement de la partie de branche 63 dépassant du puits 59 provoque le pliage de cette partie et son engagement dans la rainure 60 du boîtier, en assurant ainsi la liaison de l'épingle 62 avec ce boîtier. Après mise en place du fil d'arcade C, pour communiquer un couple de redressement au boîtier et à la dent, il suffit de rapprocher la branche 64 de la branche 63, jusqu'à ce que le crochet 65 vienne au-dessus du fil d'arcade C, puis de relâcher la branche 64 de manière que ce crochet se crochète sur le fil d'arcade, comme montré à la figure 9.

On notera que, dans cette configuration, exceptée la branche métallique 64, tous les autres éléments des moyens de redressement sont cachés derrière la paroi 51 du boîtier.

La figure 10 montre que, pour les prémolaires, maxillaires et mandibulaires, le pont intermédiaire 52 et la paroi antérieure 51 sont décalés en direction de la racine de la dent par rapport à leur embase 50a qui est alors plus large. Cela supprime les risques d'interférence occlusale avec les prémolaires en vis à vis et donne une meilleure stabilité au boîtier en modifiant le niveau et la hauteur du collage de son embase sur la dent. Le débordement de l'embase 50a, qui est de faible valeur, influe peu sur l'esthétique général de l'appareil, d'autant plus que le boîtier concerné est peu visible.

Enfin, la figure 16 montre que chaque boîtier pour les molaires est composé d'une embase 50b de laquelle fait saillie un redan 67 qui est traversé par un tunnel 68 ayant une section transversale de même forme et dimensions, au jeu fonctionnel près, que celles du fil d'arcade ayant les dimensions transversales maximales. Le redan est également solidaire d'un crochet gingival 69 permettant l'accrochage d'une liaison classique intermaxillaire.

De façon connue et comme montré figure 4, dans chacun des boîtiers ainsi décrits, le plan médian P1 du boîtier, donc de la gorge 54, forme par rapport au plan médian P2 de la dent sur laquelle il doit être posé, un angle V de valeur variable selon les dents. De même, comme montré figures 5 et 16, le plan médian P3 de la gorge 54 ou du tunnel 68 forme, par rapport au plan médian P4 de la dent, un angle T dont la valeur varie selon la dent considérée.

Le tableau annexé indique, à titre d'exemple, les valeurs données à ces différents angles pour chacun des boîtiers, en rappelant les caractéristiques de chaque boîtier.

La mise en place de l'appareil s'effectue en collant d'abord les boîtiers sur la face avant des dents mises en cause, soit comme devant être orientées, soit comme servant d'appui. Ce collage est précédé d'un positionnement précis qui est effectué avec une jauge de positionnement désignée de façon générale par 88 à la figure 20.

Cette jauge est constituée par un barreau 89 qui, en matériau stérilisable comporte, en saillie d'au moins l'une de ses faces en bout 90, une palette 91 d'appui sur le sommet d'une dent. La palette 91 est associée à une lame 92 qui lui est parallèle et qui comporte une partie 92a saillant du barreau et une partie 92b engagée dans une glissière 93 de ce barreau. La lame est réalisée en matière synthétique transparente stérilisable. Elle est interchangeable et éventuellement jetable.

Eventuellement, une vis 94 assure sa fixation sur le barreau. Sa face en bout 95, qui est en retrait de celle de la palette 91, comporte une ligne horizontale 96, colorée ou non. La distance I entre la ligne 96 et la face 91a de la palette 91 est bien entendu adaptée au boîtier B, qui lui-même est spécifique à un type de dent. La valeur de I est, par exemple :
- de 3,5mm pour les incisives latérales maxillaires et les secondes prémolaires,
- de 4 mm pour les incisives centrales maxillaires et mandibulaires et pour les premières prémolaires,
- de 4,5 mm pour les canines mandibulaires,
- et de 5 mm pour les canines maxillaires.

Pour réduire le nombre de jauge, chaque barreau 89 comporte à chacune de ses extrémités un ensemble palette 91/lame 92 propre à une mesure de positionnement. Ainsi deux barreaux suffisent pour assurer les quatre mesures de positionnement de tous les boîtiers.

Pour positionner un boîtier B12 sur une canine latérale maxillaire 12, ce boîtier est préalablement muni, sur sa face antérieure, d'une croix effaçable formée par un trait vertical 97 et un trait horizontal 98. Après mise en place de la colle de fixation du boîtier sur la dent et pendant que cette colle permet encore de déplacer le boîtier, celui-ci est d'abord positionné transversalement en amenant son trait vertical 97 sensiblement dans le plan vertical médian de la dent, puis est positionné verticalement au moyen de la jauge 88.

Après avoir posé la palette 91 sur la dent, l'hortodontiste déplace le boîtier jusqu'à ce que son trait horizontal 98 coïncide avec la ligne 96 de la lame. Ce réglage est facilité par la transparence de la lame 92. A ce stade la jauge de positionnement est retirée.

Lorsque tous les éléments sont positionnés et fixés, il est procédé à la mise en place des ligatures E puis à l'introduction des fils d'arcade C, d'abord dans les tunnels 68 des boîtiers fixés sur les molaires, puis, dans les gorges horizontales 54 de chacun des boîtiers. Cet engagement s'effectue très aisément, quelles que soient les sections du fil d'arcade utilisé et l'élasticité des branches de ce fil. Cet engagement s'effectue de bas en haut pour les boîtiers maxillaires, et de haut en bas pour les boîtiers mandibulaires. Lorsque les fils mandibulaires sont posés, il est procédé, si l'appareil comporte des moyens de redressement D, à la mise en place des crochets 65, puis à la pose de moyens de ligature.

Pour faciliter cette mise en place et suivant une caractéristique de l'invention, chaque anneau de ligature 70, qui est réalisé en matière synthétique élastique, et par exemple en élastomère, est solidaire d'un manche de préhension 71 auquel il est relié par une zone cassable 72. Cet ensemble est fourni sous la forme d'une grappe 73 composée d'une branche principale 74 de part et d'autre de laquelle sont disposés transversalement les manches 71 liés à cette branche par des zones cassables 75.

Avec cet agencement, chaque anneau 70 peut très aisément être saisi par son manche 71 pour être détaché de la grappe 73 et être amené autour du pont intermédiaire 52 et dans les gorges 56 et 55 de chaque boîtier concerné, comme montré à la figure 12, et cela avant mise en place du fil d'arcade C. Après mise en place de ce fil d'arcade, et comme montré à la figure 13, l'orthodontiste peut, sans difficulté, en saisissant le manche de préhension 71, faire pivoter l'anneau 70 autour du fil d'arcade C pour venir accrocher sa boucle, jusqu'alors inférieure, dans la gorge 56, comme montré figures 13 et 14, en formant ainsi une double ligature. Dès que la ligature est terminée, le manche 71 est séparé de l'anneau par sectionnement ou cassage de la zone 72. La figure 14 montre que l'anneau 70 s'insère totalement derrière la paroi 51.

Cette ligature, à double passage, forme deux boucles qui, disposées de part et d'autre du pont 52, entourent les parties du fil qui sortent de la gorge 54. Ces boucles assurent le calage en translation verticale du fil contre le fond de la gorge 54, son calage en translation horizontale contre l'une des parois verticales de la gorge, s'il y a du jeu, et son calage en translation longitudinale. Ainsi, le fil d'arcade C est lié fermement et positivement avec le boîtier, de sorte que celui-ci ne peut pas pivoter par rapport à ce fil. Il en résulte que l'effort de redressement ne peut communiquer à la dent qu'un effort de translation parallèlement à elle-même, favorable au redressement.

Les fils d'arcade peuvent être en acier ou dans tout autre alliage combinant nickel et titane ou titane et molybdène, de même que dans des alliages à mémoire de forme ou en matériau composite. Avantageusement, ils recoivent, dans les intervalles entre boîtiers, des manchons en matière synthétique ayant la couleur des dents. Dans ces conditions, la totalité de la partie avant de l'appareil est de la couleur des dents et améliore considérablement l'esthétique de la bouche.

A titre d'exemple, les fils d'arcade ont selon leur section transversale les dimensions suivantes exprimées en millimètre :
- section ronde ; dimension diamétrale : 0,304 mm ; 0,355 mm ; 0,406 mm ; 0,457 mm et 0,508 mm
- section carrée : 0,508 mm x 0,508 mm et 0,558mm x 0,558 mm
- section rectangulaire pour insertion verticale avec côté étroit horizontal : 0,558 mm x 0,406 mm ; 0,635 mmx 0,482 mm et 0,635 mm x 0,508 mm.

Dans une forme d'exécution montrée aux figures 17 et 18, le fil d'arcade maxillaire, destiné à assurer une distalisation bilatérale, comprend sur chacune de ses branches 80, un ressort hélicoïdal 82 qui est disposé autour de ladite branche. Chaque ressort est solidarisé avec la branche par une soudure 83 de son extrémité antérieure. Cette soudure est réalisée dans la zone de la branche qui vient en retrait des canines. Ce fil d'arcade comporte également un crochet vertical 84 qui fait saillie vers le haut de la partie de branche qui vient entre l'incisive et la canine latérale. La position des éperons sur les branches 80 dépend de la morphologie du patient, au même titre d'ailleurs que la position des soudures d'arrêt 83. En d'autres termes, ce type de fil d'arcade est fourni en plusieurs modèles se différenciant par la forme de l'arc et par la position des crochets 84 et des soudures 83.

Ce fil d'arcade de distalisation active est utilisé dans une première étape de traitement pour distaliser les molaires et les canines. Il implique que les prémolaires ne soient pas munis d'un quelconque boîtier, comme montré pour celles 14 et 15 à la figure 18. Cette figure montre également que ce fil d'arcade est mis en oeuvre avec une arcade maxillaire comportant, sur la molaire 16, un boîtier B16, et sur l'arcade mandibulaire, des boîtiers B46 et B47 du type de celui représenté à la figure 16. L'arcade maxillaire est équipé d'un boîtier pour canine B13, du type de celui représenté aux figures 5 à 6.

Lorsque les deux fils d'arcade sont positionnés, de chaque côté de l'appareil, sont mis en place deux liens élastiques de traction intermaxillaire, à savoir un lien 85 allant du crochet 84 au crochet 69 du boîtier B46 et un lien 86 allant du crochet 57 du boîtier B13 fixé sur la canine, à un crochet 69 d'un boîtier B47 fixé sur la molaire 47. Le fil d'arcade est soumis, par ces liens, à un effort de traction dans le sens de la flèche 87 qui amène l'extrémité libre de son ressort 82 en appui et en compression contre le redan 67 du boîtier B16 et communique ainsi à la molaire 16 un effort de distalisation. Cette mécanique originale de distalisation des dents évite les extractions orthodontiques de prémolaires saines, habituellement prescrites pour faire de la place postérieurement chez les sujets qui ont "les dents en avant".

Si ce dispositif est partiellement visible à la première phase du traitement, il est beaucoup moins contraignant pour le patient qu'un appareillage extra oral et notamment un appareillage à appui péricranien.

Il ressort de ce qui précède que l'appareil selon l'invention, non seulement, facilite le travail du praticien et améliore l'esthétique du patient, mais également, grâce à la bonne tenue des fils d'arcade dans les boîtiers améliore le redressement des dents, et en conséquence, permet de réduire le temps de traitement, tout en améliorant l'hygiène dentaire.

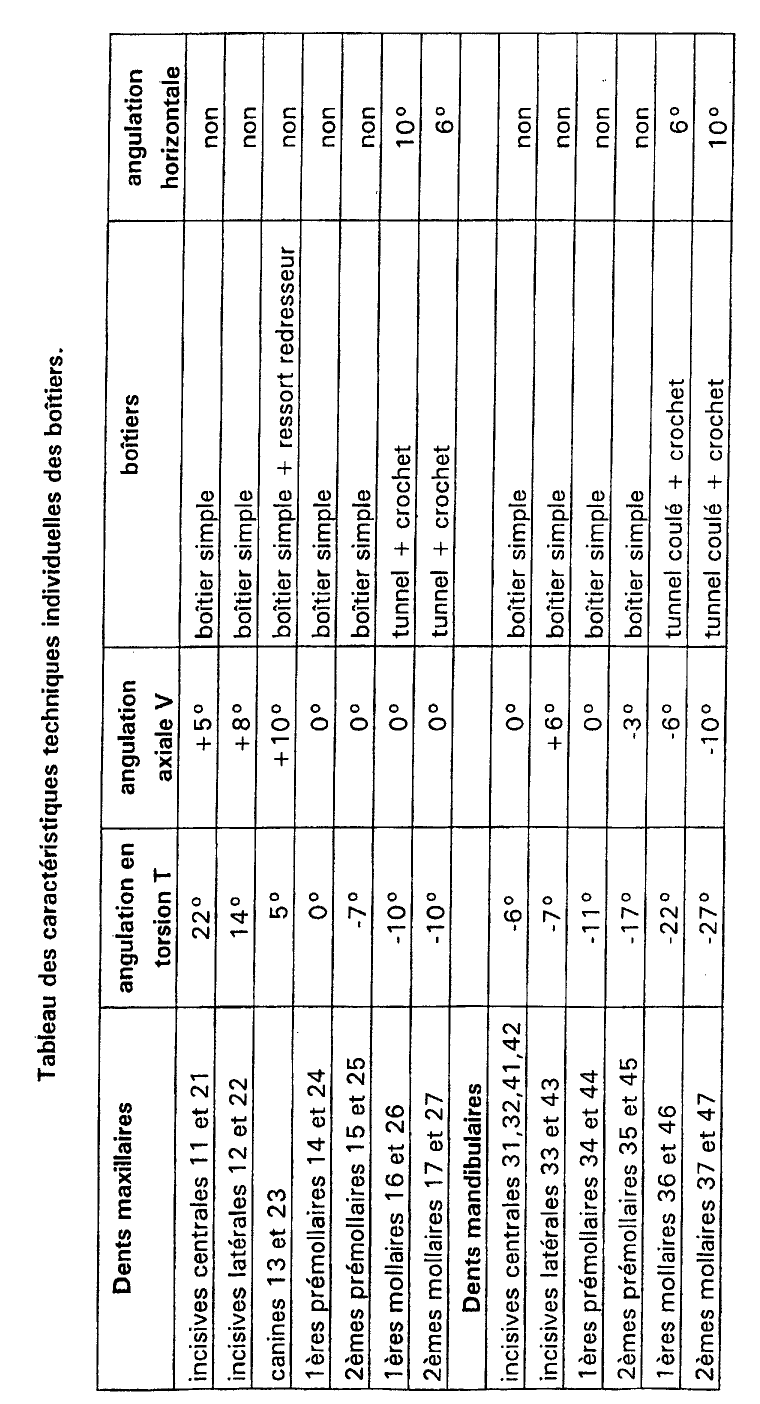

## Revendications

1. Kit dentaire orthodontique composé, pour chaque arcade dentaire, respectivement, maxillaire et mandibulaire :
- d'une série de fils d'arcade (C) formant un arc en U, entourant chaque arcade dentaire et se différenciant par les efforts de redressement que leurs branches fournissent, lesdits fils ayant une section transversale rectangulaire avec leurs petits côtés parallèles au plan d'occlusion,
- de boîtiers métalliques (B) se fixant par collage de leur embase (50) sur les incisives, canines et prémolaires, et comportant une gorge horizontale (54) de réception du fil d'arcade (C), ladite gorge (54) débouchant en direction du plan d'occlusion et étant formée dans un pont intermédiaire (52) reliant l'embase (50) à une paroi antérieure (51),
- de boîtiers métalliques se fixant par collage de leur embase sur les molaires et comprenant un tunnel (68) de positionnement de l'extrémité de la branche correspondante du fil d'arcade (C),
- de liens (E), tels que des anneaux élastiques (70), de ligature du fil d'arcade dans les gorges (54) des boîtiers,
- et de moyens communiquant, au moins au fil d'arcade maxillaire et dans une phase de traitement, un effort de traction dirigé vers l'arrière, **caractérisé en ce que** chacun des boîtiers pour les incisives, canines et prémolaires comporte, pour l'accrochage d'un anneau élastique (70) de ligature avec le fil d'arcade (C), et dans le pont intermédiaire (52), d'un côté, entre l'embase (50) et la gorge (54) pour le fil d'arcade (C), une rainure d'ancrage (55) débouchant en direction du plan d'occlusion, et de l'autre côté, entre l'embase (50) et la paroi antérieure (51), une gorge horizontale (56) débouchant à l'opposé de la gorge (54) pour le fil d'arcade (C), tandis que la paroi antérieure (51) a une largeur et une hauteur supérieures à celles de l'embase (50) et à celles du pont intermédiaire (52), pour masquer ce pont et l'anneau élastique (70) de ligature du fil d'arcade.

2. Kit selon la revendication 1, **caractérisé en ce que** la ligature formée par l'anneau élastique (70) comporte deux boucles entourant les parties du fil d'arcade (C) débordant longitudinalement du pont intermédiaire (52) et ces boucles résultent de la mise en place de l'anneau élastique autour du pont intermédiaire (52) dans la rainure (55) et dans la gorge (56) du boîtier, puis, après introduction du fil d'arcade (C) dans la gorge (54, du pivotement de l'anneau autour du fil d'arcade pour accrochage de sa boucle provenant de la rainure (55) dans la gorge (56) opposée.

3. Kit selon la revendication 1, **caractérisé en ce que** l'anneau élastique (70) est en élastomère et est lié par une zone cassable (75) à un manche de manipulation (71), lui même lié par une zone cassable (75) à la branche centrale (74) d'une grappe (73), ladite grappe étant composée de plusieurs ensembles manche-anneau, répartis de part et d'autre de sa branche centrale (74).

4. Kit selon la revendication 1, **caractérisé en ce que** chaque boîtier (B) pour les canines et les prémolaires comporte, dans sa partie entre l'embase (50) et la paroi antérieure (51), un puits vertical (59) débouchant dans la gorge (54) pour le fil d'arcade (C) et constituant, avec une rainure (60) ménagée dans le fond de ladite gorge (54), organe d'ancrage pour l'extrémité coudée de l'une des branches (63) d'un ressort en épingle (62), de redressement axial de la dent, l'autre branche (64) de ce ressort étant munie d'un crochet extrême (65), se crochetant sur le fil d'arcade (C).

5. Kit selon la revendication 1, **caractérisé en ce que** la face antérieure de la paroi antérieure (51) de chaque boîtier pour les incisives, canines et prémolaires, est recouverte par une plaquette (53) ayant une couleur proche de celle des dents.

6. Kit selon la revendication 5, **caractérisé en ce que** chacun des fils d'arcade (C), respectivement maxillaire et mandibulaire, est entouré, dans les intervalles entre boîtiers (B), par des manchons en matière synthétique ayant la couleur des dents.

7. Kit selon la revendication 1, **caractérisé en ce qu'**il comporte un fil d'arcade maxillaire (G) de distalisation bilatérale des molaires et canines comprenant, sur chacune de ses branches latérales (80), d'une part, un ressort hélicoïdal (82) disposé autour de ladite branche, et dont l'extrémité antérieure est liée à cette branche par une soudure (83), disposée sur une zone de cette branche venant en retrait de la canine, tandis que l'extrémité postérieure de ce ressort (82) vient en appui sur le boîtier (B) de la molaire à redresser, et, d'autre part, un crochet vertical (84) qui, saillant vers le haut et de la partie de la branche venant entre l'incisive latérale et la canine, constitue moyen d'accrochage pour l'une des extrémités d'un anneau élastique (85) de traction intermaxillaire, dont l'autre extrémité est accrochée au crochet (69) du boîtier fixé sur la première molaire mandibulaire correspondante.

8. kit selon la revendication 1, **caractérisé en ce que** chaque boîtier (B) comporte sur sa face antérieure une croix de centrage effaçable, composée d'un trait vertical (97) et d'un trait horizontal (98), et apte à coopérer avec une jauge de positionnement (88), tandis que ladite jauge est composée, d'une part, d'un barreau (89) dont au moins l'une des faces en bout (90) est prolongée par une palette (91) d'appui sur la dent, et, d'autre part, d'une lame interchangeable (92) qui, parallèle à la palette (91), est plus courte qu'elle, fait saillie de la même face en bout (90), est réalisée dans un matériau transparent et comporte, sur sa face en bout, une ligne horizontale (96) de positionnement du trait horizontal (98) du boîtier.

## Claims

1. Orthodontic dental kit which, for each in each case maxillary and mandibular dental arch, is composed:
- of a series of arch wires (C) forming a U-shaped arc, surrounding each dental arch and differing from one another in the straightening forces which their branches supply, the said wires having a rectangular cross section with their small sides parallel to the occlusal plane,
- of metal housings (B) fastened by their base (50) being glued to the incisors, canines and premolars and comprising a horizontal groove (54) for receiving the arch wire (C), the said groove (54) issuing in the direction of the occlusal plane and being formed in an intermediate bridge (52) connecting the base (50) to an anterior wall (51),
- of metal housings fastened by their base being glued to the molars and comprising a tunnel (68) for positioning the end of the corresponding branch of the arch wire (C),
- of ties (E), such as elastic rings (70), for tying the arch wire in the grooves (54) of the housings,
- and of means imparting, at least to the maxillary arch wire and in one treatment phase, a tensile force directed towards the rear, **characterized in that** each of the housings for the incisors, canines and premolars comprises, for attaching an elastic ring (70) for tying to the arch wire (C), and in the intermediate bridge (52), on one side, between the base (50) and the groove (54) for the arch wire (C), an anchoring flute (55) issuing in the direction of the occlusal plane and, on the other side, between the base (50) and the anterior wall (51), a horizontal groove (56) issuing opposite the groove (54) for the arch wire (C), while the anterior wall (51) has a width and a height greater than those of the base (50) and than those of the intermediate bridge (52), in order to mask this bridge and the elastic ring (70) for tying the arch wire.

2. Kit according to Claim 1, **characterized in that** the tie formed by the elastic ring (70) comprises two loops surrounding the parts of the arch wire (C) which project longitudinally from the intermediate bridge (52), and these loops are obtained as a result of the elastic ring being put in place around the intermediate bridge (52) in the flute (55) and in the groove (56) of the housing, then, after the introduction of the arch wire (C) into the groove (54), of the ring being pivoted around the arch wire for the purpose of attaching its loop coming from the flute (55) in the opposite groove (56).

3. Kit according to Claim 1, **characterized in that** the elastic ring (70) is made of elastomer and is connected by means of a breakable zone (75) to a manipulating handle (71), itself connected by means of a breakable zone (75) to the central branch (74) of a cluster (73), the said cluster being composed of a plurality of handle/ring assemblies distributed on either side of its central branch (74).

4. Kit according to Claim 1, **characterized in that** each housing (B) for the canines and premolars comprises, in its part between the base (50) and the anterior wall (51), a vertical well (59) issuing into the groove (54) for the arch wire and forming, with a flute (60) made in the bottom of the said groove (54), an anchoring member for the bent end of one of the branches (63) of a kickover spring (62) for the axial straightening of the tooth, the other branch (64) of this spring being provided with an end hook (65) hooking onto the arch wire (C).

5. Kit according to Claim 1, **characterized in that** the anterior face of the anterior wall (51) of each housing for the incisors, canines and premolars is covered by a pad (53) having a colour close to that of the teeth.

6. Kit according to Claim 5, **characterized in that** each of the in each case maxillary and mandibular arch wires (C) is surrounded, in the gaps between housings (B), by sleeves made of synthetic material having the colour of the teeth.

7. Kit according to Claim 1, **characterized in that** it comprises a maxillary arch wire (G) for the bilateral distalization of the molars and canines, comprising on each of its lateral branches (80), on the one hand, a helical spring (82) which is arranged around the said branch and the anterior end of which is connected to this branch by means of a weld (83) arranged on a zone of this branch which is set back from the canine, while the posterior end of this spring (82) comes to bear on the housing (B) of the molar to be straightened, and, on the other hand, a vertical hook (84) which, projecting upward and from that part of the branch which comes between the lateral incisor and the canine, forms an attachment means for one of the ends of an elastic intermaxillary traction ring (85), the other end of which is attached to the hook (69) of the housing fastened to the corresponding first mandibular molar.

8. Kit according to Claim 1, **characterized in that** each housing (B) comprises, on its anterior face, an erasable centering cross composed of a vertical stroke (97) and of a horizontal stroke (98) and capable of cooperating with a positioning gauge (88), while the said gauge is composed, on the one hand, of a bar (89), at least one of the end faces (90) of which is prolonged by a spatula (91) for bearing on the tooth, and, on the other hand, of an interchangeable blade (92) which, parallel to the spatula (91), is shorter than the latter, projects from the same end face (90), is produced from a transparent material and comprises, on its end face, a horizontal line (96) for positioning the horizontal stroke (98) of the housing.

## Patentansprüche

1. Orthodontischer Dentalbausatz, der für den maxillaren bzw. mandibularen Zahnbogen jeweils besteht aus:
- einer Reihe von Bogendrähten (C), die einen U-förmigen Bogen bilden, der jeden Zahnbogen umgibt und die sich durch die Stellkräfte unterscheiden, die ihre Zweige erzeugen, wobei die Drähte einen rechteckförmigen Querschnitt haben, bei dem die kleinen Seiten parallel zur Okklusionsebene sind,
- metallischen Gehäusen (B), die durch Kleben an ihrer Basis (50) auf den Schneidezähnen, den Eckzähnen und den vorderen Backenzähnen befestigt werden und eine horizontale Nut (54) für die Aufnahme eines Bogendrahts (C) aufweisen, wobei die Nut (54) in der Richtung der Okkulusionseben mündet und in einer Zwischenbrücke (52) gebildet ist, welche die Basis (50) mit einer vorderen Wand (51) verbindet,
- metallischen Gehäusen, die durch Kleben ihrer Basis auf den Backenzähnen befestigt werden und einen Tunnel (68) aufweisen zur Positionierung des Endes des entsprechenden Zweigs des Bogendrahts (C),
- Verbindungen (E), wie z.B. elastische Ringe (70), zur Anbindung des Bogendrahts in den Nuten (54) der Gehäuse,
- und Mitteln, die zumindest dem maxillaren Bogendraht während einer Behandlungsphase eine nach hinten gerichtete Zugkraft verleihen,
**dadurch gekennzeichnet, dass** jedes der Gehäuse für die Schneidezähne, Eckzähne und vorderen Backenzähne zum Einhängen eines elastischen Rings (70) zur Anbindung mit dem Bogendraht (C) und in der Zwischenbrücke (52) auf der einen Seite zwischen der Basis (50) und der Rille (44) für den Bogendraht (C) eine Verankerungsrille (55) aufweist, die in der Richtung der Okklusionsebene mündet, und auf der anderen Seite zwischen der Basis (50) und der vorderen Wand (51) eine horizontale Nut (56) aufweist, die gegenüber von der Nut (54) für den Bogendraht (C) mündet, während die vordere Wand (51) eine Breit und eine Höhe hat, die größer als diejenigen der Basis (50) und diejenigen der Zwischenbrücke (52) sind, um diese Brücke und den elastischen Ring (70) zur Anbindung des Bogendrahts zu maskieren.

2. Bausatz nach Anspruch 1, **dadurch gekennzeichnet, dass** die durch den elastischen Ring (70) gebildete Anbindung zwei Schlaufen aufweist, welche die Teile des Bogendrahts (C) umgibt, die in Längsrichtung von der Zwischenbrücke (52) überstehen, wobei diese Schlaufen sich ergeben durch Anbringen des elastischen Rings um die Zwischenbrücke (52) herum in der Rille (55) und in der Nut (56) des Gehäuses, und im Anschluss an das Einführen des Bogendrahts (C) in die Nut (54) durch Schwenken des Rings um den Bogendraht herum zum Einhängen seiner Schlaufe, welche von der Rille (55) in der gegenüberliegenden Nut (56) stammt.

3. Bausatz nach Anspruch 1, **dadurch gekennzeichnet, dass** der elastische Ring (70) aus Elastomer besteht und über einen Bruchbereich (55) mit einem Betätigungsstiel (71) verbunden ist, der wiederum über einen Bruchbereich (75) mit dem mittigen Stiel (74) eines Ankers (73) verbunden ist, wobei der Anker aus mehreren Stiel/Ring-Einheiten zusammengesetzt ist, die beiderseits seines mittigen Stiels (74) verteilt sind.

4. Bausatz nach Anspruch 1, **dadurch gekennzeichnet, dass** jedes Gehäuse (B) für die Eckzähne und vorderen Backenzähne in seinem Teil zwischen der Basis (50) und der vorderen Wand (41) einen vertikalen Schacht (59) aufweist, der in der Nut (54) für den Verankerungsdraht (C) mündet und mit einer in den Boden der Nut (54) eingearbeiteten Rille (60) ein Verankerungsorgan für das abgewinkelte Ende eines der Schenkel (63) einer Winkelfeder (62) bildet als axiale Stellkraft des Zahns, wobei der andere Schenkel (64) dieser Feder mit einem Endhaken (65) ausgestattet ist, der sich am Bogendraht (C) einhakt.

5. Bausatz nach Anspruch 1, **dadurch gekennzeichnet, dass** die Vorderfläche der vorderen Wand (51) jedes Gehäuses für die Schneidezähne, die Eckzähne und die vorderen Backenzähne durch ein Plättchen (53) abgedeckt ist, das eine Farbe hat, die derjenigen der Zähne nahe kommt.

6. Bausatz nach Anspruch 5, **dadurch gekennzeichnet, dass** der maxillare bzw. der mandibulare Bogendraht (C) in den Abschnitten zwischen den Gehäusen (B) von Umhüllungen aus Kunststoffmaterial umgeben ist, welche die Farbe der Zähne haben.

7. Bausatz nach Anspruch 1, **dadurch gekennzeichnet, dass** er einen maxillaren Bogendraht (G) zur bilateralen Distalisation der Backenzähne umfasst und außerdem aufweist: auf jedem seiner Seitenzweige (80) einerseits eine Schraubenfeder (82), die um den Zweig herum angeordnet ist und deren vorderes Ende mit demjenigen des Zweigs über eine Verschweißung (83) verbunden ist, die auf einem Bereich dieses Zweigs zurückgesetzt von dem Eckzahn angeordnet ist, während das hintere Ende dieser Feder (82) an dem Gehäuse (B) des zu stellenden Backenzahns anliegt; und andererseits einen vertikalen Haken (84), der, hervorstehend nach oben und aus dem Teil des Zweigs, der zwischen den seitlichen Schneidezahn und den Eckzahn gelangt, ein Aufhängemittel für eines der Enden eines elastischen Rings (85) für den intermaxillaren Zug bildet, wobei das andere Ende an dem Haken (69) des Gehäuses eingehängt ist, das auf dem entsprechenden ersten mandibularen Backenzahn befestigt ist.

8. Bausatz nach Anspruch 1, **dadurch gekennzeichnet, dass** jedes Gehäuse (B) auf seiner vorderen Fläche ein entfernbares Zentrierkreuz aufweist, das aus einem vertikalen Strich (97) und einem horizontalen Strich (98) besteht und mit einer Positionierlehre (88) zusammenwirken kann, wobei die Lehre zusammengesetzt ist aus einerseits einem Stab (89), bei dem mindestens eine der Seiten am Ende (90) durch eine Palette (91) für die Auflage auf dem Zahn verlängert ist, und andererseits aus einer austauschbaren Lamelle (92), die parallel zu der Palette (91) und kürzer als diese ist und aus derselben Fläche am Ende (90) hervorsteht und aus einem durchsichtigen Material gefertigt ist und an seiner Fläche am Ende eine horizontale Linie (96) zur Positionierung des horizontalen Strichs (98) des Gehäuses aufweist.
